# EUROPÄISCHE PATENTSCHRIFT

(11) **EP 2 948 291 B1**
(45) Veröffentlichungstag und Bekanntmachung des Hinweises auf die Patenterteilung: **08.02.2017**
(21) Anmeldenummer: 14700211.7
(22) Anmeldetag: 10.01.2014
(51) Int. Cl.: B29C 49/04, B43K 15/00, B43K 8/02, B43M 11/08

(54) **VERFAHREN ZUM HERSTELLEN EINES AUFTRAGGERÄTS SOWIE AUFTRAGGERÄT**
METHOD FOR PRODUCING AN APPLICATOR, AND APPLICATOR
PROCÉDÉ DE FABRICATION D'UN APPAREIL APPLICATEUR ET APPAREIL APPLICATEUR

(30) Priorität: 24.01.2013 DE 102013001182
(43) Veröffentlichungstag der Anmeldung: 02.12.2015
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Bartels, Martin Erich Arthur
(86) Internationale Anmeldenummer: PCT/EP2014/000041
(87) Internationale Veröffentlichungsnummer: WO 2014/114429

(56) Entgegenhaltungen:
- WO-A1-91/18750
- DE-A1-102012 107 045

## Beschreibung

Die Erfindung betrifft ein Verfahren zum Herstellen eines Auftraggeräts zum Applizieren von flüssigen oder pastösen Medien, das einen das betreffende Medium bevorratenden Behälter und ein Auftragorgan aufweist, das am Behälter in einer Gebrauchsstellung derart angebracht ist, dass es durch Kapillarwirkung das Medium außerhalb des Behälters für die Applizierung zur Verfügung stellt.

Auftraggeräte dieser Gattung dienen zum Schreiben, Zeichnen oder Malen und finden besondere Verbreitung als Markierungsgeräte in Form sog. Marker zur Bildung von Farbmarkierungen, beispielsweise von hervorzuhebenden Stellen bei Texten oder Zeichnungen. In Anbetracht dieser vielfältigen Einsatzmöglichkeiten sind derartige Auftraggeräte in großen Stückzahlen herzustellen, so dass die Höhe anfallender Herstellungskosten einen wesentlichen Faktor darstellt.

Im Hinblick auf diese Problematik stellt sich die Erfindung die Aufgabe, ein Verfahren aufzuzeigen, das die Herstellung von Auftraggeräten der betrachteten Art auf besonders rationelle und dadurch kostengünstige Weise ermöglicht.

Erfindungsgemäß ist diese Aufgabe durch ein Verfahren gelöst, das die Merkmale des Patentanspruchs 1 in seiner Gesamtheit aufweist.

Nach dem kennzeichnenden Teil des Anspruchs 1 sieht die Erfindung vor, dass der das betreffende Medium bevorratende Behälter in der Weise gebildet wird, dass ein Schlauch aus thermoplastischem Kunststoff durch Extrudieren gebildet, in eine Form eingeführt und in dieser zum Behälter aufgeweitet wird, wobei der gebildete Behälter noch innerhalb der Form mit dem Medium befüllt wird. Dadurch macht sich die Erfindung die fertigungstechnischen Vorteile der bekannten Blasform- und Füllverfahren zunutze, die eine besonders schnelle und rationelle Fertigung von Kunststoffbehältern, beispielsweise in Ampullenform, ermöglichen, wobei für eine Massenfertigung besonders kurze Fertigungs-Taktzeichen erreichbar sind, weil die wesentlichen Fertigungsvorgänge, wie Bilden der Behälterform durch Überdruck und/oder Unterdruck, sowie Befüllen durchgeführt werden können, solange sich der Behälter in plastischem und dadurch bearbeitbarem Zustand noch innerhalb der Form befindet.

Während sich der gebildete und zumindest teilweise befüllte Behälter innerhalb der Form befindet, sieht die Erfindung weiter vor, dass durch Trennen des Behälters vom Extrusionsschlauch an der Oberseite des Behälters eine Öffnung gebildet wird, über die der Behälter an der Oberseite für das Verbringen des zugehörigen Auftragorgans, insbesondere für das Einbringen desselben in das Innere des Behälters, zugänglich ist, wobei das in die Gebrauchsstellung an der Behälteröffnung angeordnete Auftragorgan mittels einer Schließbewegung bewegbarer Formteile festgelegt wird, indem der plastische Kunststoff des Behälters entsprechend geformt wird, um vorzugsweise gleichzeitig einen Verschluss des Behälters zu bilden. Diese Vorgehensweise ermöglicht die Herstellung von Auftraggeräten mit hoher Fertigungsgeschwindigkeit, so dass hohe Stückzahlen besonders wirtschaftlich realisierbar sind.

Für die Ausbildung des Behälters kann mit Vorteil so vorgegangen werden, dass der Schlauch durch geöffnete, bewegbare Kopfbacken der Form hindurch in eine den Behälter formende Unterform eingeführt wird und dass die Kopfbacken zur Festlegung des eingeführten Auftragorgans nachträglich dann geschlossen werden.

Die Anordnung kann mit besonderem Vorteil so getroffen werden, dass ein Auftragorgan eingeführt wird, das einen Haltekörper aufweist, der für ein kapillares, streifen- oder bandförmiges Material des Auftragkörpers eine Einfassung zwischen einem Zuführteil, das bei der Gebrauchsstellung in den Behälter ragt, und einem für die Applizierung außerhalb des Behälters befindlichen Abgabeteil bildet, wobei das Auftragorgan durch Anformen des Schlauches an den Haltekörper durch Schließen der Kopfbacken festgelegt wird.

Mit besonderem Vorteil kann so vorgegangen werden, dass zur Bildung eines über die Festlegestelle am Haltekörper des Auftragorgans überstehenden Schlauchabschnitts das Trennen des Schlauches oberhalb der Kopfbacken erfolgt. Dadurch steht an der Oberseite des Behälters ein freier Schlauchabschnitt zur Verfügung, der es ermöglicht, dass bei dem nach dem Einführen des Auftragorgans erfolgenden Schließen der Kopfbacken ein das Abgabeteil des Auftragorgans umschließendes Verschlussteil geformt wird.

Mit besonderem Vorteil kann hierbei so vorgegangen werden, dass beim Formen des Verschlussteils eine Sollbruchstelle ausgebildet wird, an der das Verschlussteil, beispielsweise in Form einer Kappe, in der Art eines Knebelverschlusses ausgebildet vom Behälter abtrennbar und mithin abnehmbar ist.

Um den Vorgang des Einführens des Auftragorgans durch den freien, oberhalb des Behälters befindlichen Schlauchabschnitt hindurch einfach und sicher zu gestalten, kann durch an den Kopfbacken vorgesehene Haltebacken durch Anlegen eines Unterdrucks an der Außenseite des überstehenden Schlauchabschnitts dieser für das Einführen des Auftragorgans in definierter Form offengehalten werden.

Für eine Verwendung als sog. Marker kann der Behälter mit einer Markierungsflüssigkeit versehen werden, die insbesondere auch Farbmarkierungen ermöglicht, beispielsweise in transparenter Form für Textmarkierungen oder dergleichen.

Gemäß dem Patentanspruch 9 ist Gegenstand der Erfindung auch ein Auftraggerät, das nach dem Verfahren gemäß einem der Ansprüche 1 bis 8 hergestellt ist.

Nachstehend ist die Erfindung anhand der Zeichnung im Einzelnen erläutert. Es zeigen:
- Fig. 1: eine gegenüber einer praktischen Ausführungsform etwa um den Faktor 1,5 vergrößert gezeichnete, teilweise aufgeschnittene Vorderansicht eines Ausführungsbeispiels des nach dem erfindungsgemäßen Verfahren hergestellten Auftraggeräts;
- Fig. 2: eine gegenüber Fig. 1 weiter vergrößert gezeichnete Einzeldarstellung lediglich des Auftragorgans des Auftraggeräts;
- Fig. 3a bis 3d: schematisierte Darstellungen zur Verdeutlichung des Ablaufs des erfindungsgemäßen Verfahrens und
- Fig. 4 und 5: in schematisierter und teilweise geschnittener Darstellung einige Vorrichtungsteile einer Einrichtung zum Durchführen des erfindungsgemäßen Verfahrens.

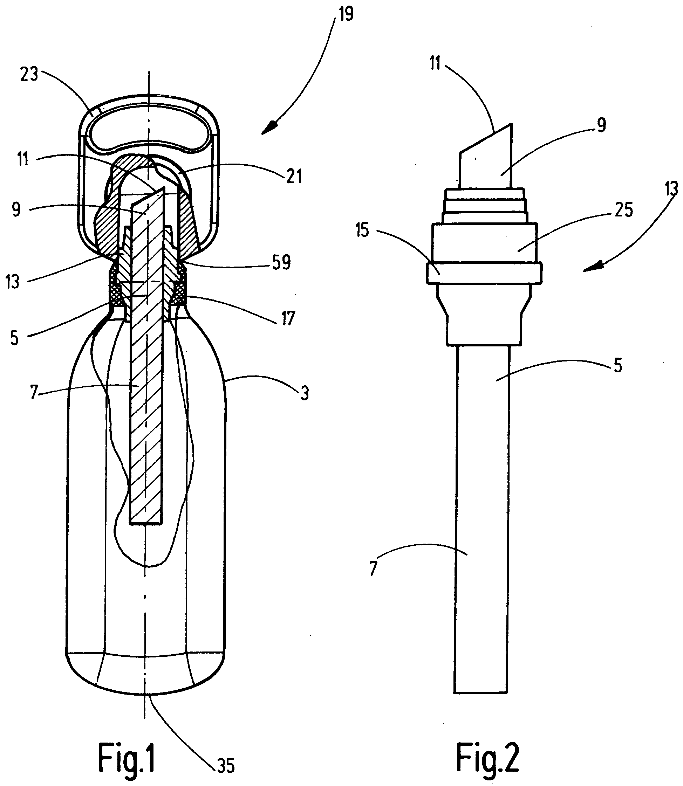

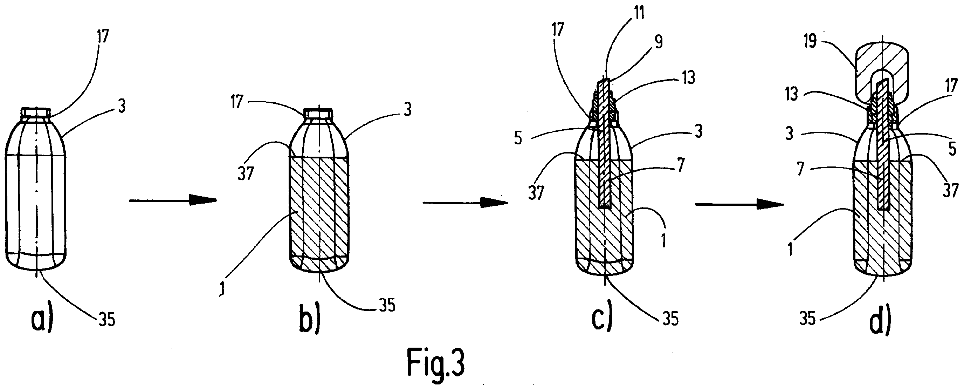

Nachstehend ist die Erfindung am Beispiel der Herstellung eines Auftraggeräts in Form eines sog. Markers beschrieben, wie er in Fig. 1 beispielhaft dargestellt ist. Für die Aufnahme von Markierungsflüssigkeit 1, die in Fig. 1 nicht dargestellt und lediglich in Fig. 3b bis 3d sichtbar ist, weist das Auftraggerät einen Behälter 3 auf, der mittels Blasformen aus einem thermoplastischen Kunststoff, beispielsweise Polyethylen niedriger oder hoher Dichte oder Polypropylen, hergestellt ist. In den Fig. 1 und 3 ist jeweils die Breitseite des unrunden Behälters 3 sichtbar, der nicht kreiszylindrisch ist, sondern einen ovalen Querschnitt besitzt. Es besteht aber durchaus auch die Möglichkeit, den Behälter 3 im Querschnitt rund auszubilden. Als Auftragorgan ist dem Behälter 3 ein kapillares Material in Form eines steif ausgeführten Bandes 5 zugeordnet, das in Fig. 1 sowie 3c und 3d in seiner Gebrauchsstellung dargestellt ist. In dieser Gebrauchsstellung ragt das Band 5 mit einem als Zuführteil 7 dienenden Bandabschnitt ins Innere des Behälters 3 und ist daher mit dem bevorrateten Medium, vorliegend der Flüssigkeit 1, in Kontakt, während sich ein oberer Längenabschnitt des Bandes 5 als Abgabeteil 9 außerhalb des Behälters 3 befindet. Das Abgabeteil 9 endet in der bei Markern üblichen, abgeschrägten Abgabe- oder Markierungsfläche 11. Das Band 5 besteht aus einem schwamm- oder filzartigen, Kapillaren aufweisenden Material, so dass an der Markierungsfläche 11 durch eine dochtartige Zufuhr Markierungsflüssigkeit 1 zur Applizierung zur Verfügung steht.

Wie am deutlichsten aus der Einzeldarstellung von Fig. 2 entnehmbar ist, ist das Band 5 am Übergang zwischen Zuführteil 7 und Abgabeteil 9 von einem hülsenartigen Haltekörper 13 eingefasst, der vorliegend aus einem vorzugsweise thermoplastischen Kunststoff besteht und an seiner kreiszylindrischen Außenseite einen radial vorstehenden Bund 15 besitzt. Dieser dient, wie aus Fig. 1 deutlich ersichtlich ist, zur axialen Festlegung des Haltekörpers 13, und damit des Auftragorgans insgesamt, am Halsteil 17 des Behälters 3. An das Halsteil 17 schließt sich ein Verschlussteil 19 an, das ein das Abgabeteil 9 des Auftragorgans umschließendes Kappenteil 21 sowie ein Griffteil 23 bildet. Durch Handhabung mittels des Griffteils 23 ist das Verschlussteil 19 aus der in Fig. 1 gezeigten Verschlussstellung abnehmbar. Wie in Fig. 1 gezeigt, sitzt bei der Verschlussstellung das Verschlussteil 19 mit der Öffnung seines Kappenteils 21 auf einer Zylinderfläche 25 (Fig. 2) des Haltekörpers 13.

Die Fig. 3 zeigt die Abfolge des Herstellungsvorgangs, beginnend mit dem Ausformen des Behälters 3 (Fig. 3a). Anschließend erfolgt (Fig. 3b) das Befüllen mit der Flüssigkeit 1 und darauffolgend das Einbringen des Auftragorgans mit dem Kapillarwirkung aufweisenden Band 5 (Fig. 3c). Fig. 3d verdeutlicht den Fertigzustand, bei dem das Band 5 des Auftragorgans durch Anformen seines Haltekörpers 13 am Halsteil 17 des Behälters 3 festgelegt ist, wobei gleichzeitig der Behälter 3 verschlossen ist und das Verschlussteil 19 gebildet ist.

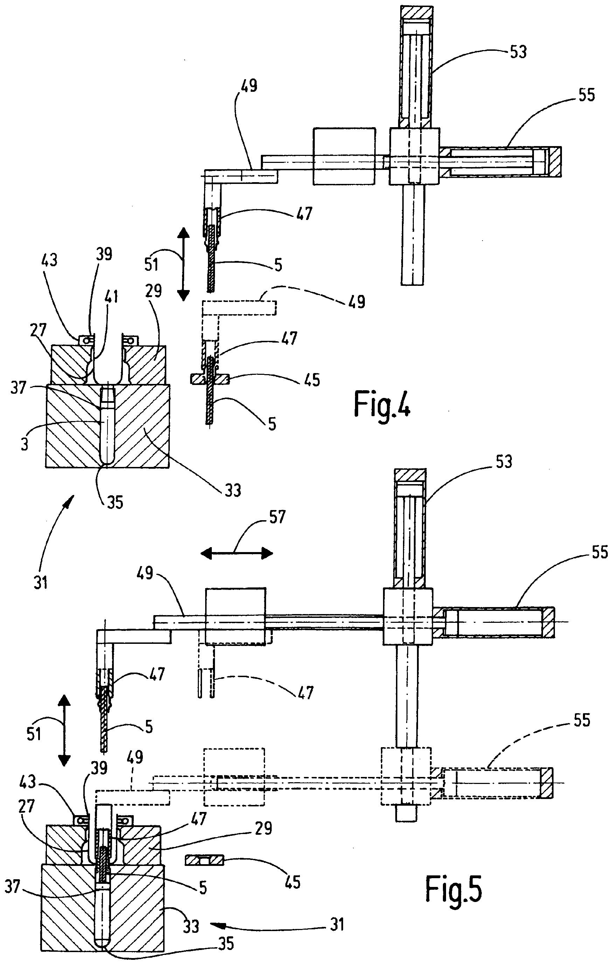

Fig. 4 und 5 zeigen einige Komponenten einer Einrichtung zur Durchführung der in Fig. 3 gezeigten Abfolge der Vorgänge. Die für ein übliches Blasformverfahren bekanntermaßen vorgesehenen Vorrichtungsteile, wie Extrudereinrichtung zur Bildung eines Kunststoffschlauchs mit zugeordnetem Blasdorn und Fülldorn für die Flüssigkeit 1, sind in Fig. 4 und 5 weggelassen, da sie von üblicher Art sein können. Die Fig. 4 zeigt vom Herstellungsprozess diejenige Stufe, bei der der Kunststoffschlauch 27 über geöffnete Kopfbacken 29 einer Blasform 31 in deren geschlossene Unterform 33 eingeführt ist. In der geschlossenen Unterform 33 ist der Kunststoffschlauch 27 zum Behälter 3 geformt, der am Boden 35 geschlossen und mittels des (nicht gezeigten) Blasdornes mit der Flüssigkeit bis zum Füllspiegel 37 befüllt ist. Der Schlauch 27 ist an einer Trennstelle 39 oberhalb der Kopfbacken 29 durchgetrennt, um eine Öffnung 41 für das Einbringen des Auftragorgans 5 zugänglich zu machen. An der Oberseite der Kopfbacken 29 befindliche Vakuum-Haltebacken 43 halten hierbei die Schlauchöffnung 41 offen. Die Fig. 4 zeigt weiter, dass ein Auftragorgan 5 durch einen bewegbaren Übergabeschieber 45 aus einem nicht gezeigten Magazin entnommen und an einen Vakuum-Halteeinsatz 47 eines Horizontalschlittens 49 übergeben ist. Dieser ist entsprechend einem Doppelpfeil 51 mittels eines Vertikalzylinders 53 vertikal sowie horizontal mittels eines Horizontalzylinders 55 bewegbar, siehe Doppelpfeil 57 von Fig. 5. Anstelle der eingesetzten Arbeitszylinder können auch übliche Servoantriebe Verwendung finden. Die Fig. 4 zeigt mit ausgezogener Linie den Horizontalschlitten 49 in angehobener Position, bereit für die entsprechend dem Doppelpfeil 57 erfolgende Horizontalbewegung in die in Fig. 5 gezeigte Einführposition. Aus dieser ist der Halteeinsatz 47 mit dem Auftragorgan 5 entsprechend dem Doppelpfeil 51 von Fig. 5 in die Einführposition bewegbar, die in Fig. 5 mit gestrichelter Linie angedeutet ist. Nach dem Einsetzen des Auftragorgans 5 und dem Anheben des Horizontalschlittens 49 aus der in Fig. 5 gestrichelt gezeigten Einführposition können die Kopfbacken 29 geschlossen werden. Durch Anformen des Schlauches 27 an den Haltekörper 13 des Auftragorgans 5 wird dieses am Halsteil 17 festgelegt, der Behälter 3 wird geschlossen, wobei gleichzeitig aus dem sich durch die Kopfbacken 29 erstreckenden, überstehenden Schlauch 27 das Verschlussteil 19 gebildet wird. Die Kopfbacken 29 sind innenseitig so geformt, dass am Schlauch 27 oberhalb des Bundes 15 des Haltekörpers 13 eine Wandeinschnürung am Schlauch 27 entsteht, so dass eine Sollbruchstelle 59, siehe Fig. 1, entsteht, an der das Verschlussteil 19 für die erstmalige Benutzung des Auftraggeräts durch manuelle Handhabung des Griffteils 23 vom Halsteil 17 abnehmbar ist.

Anstelle des bisher beschriebenen Verfahrens kann alternativ anstelle der genannten bewegbaren Formteile 29 der Form 31 zum Festlegen des radial vorstehenden Bundes 15 am Halsteil 17 ein nach der Formgebung des Behälters 3 nachträglich einsetzendes Schweißverfahren treten, beispielsweise realisiert durch von außen her angelegte beheizte Formplatten (nicht dargestellt) oder durch Einsatz eines Ultraschall- oder Laserschweißverfahrens.

## Patentansprüche

1. Verfahren zum Herstellen eines Auftraggeräts zum Applizieren von flüssigen oder pastösen Medien (1), das einen das betreffende Medium (1) bevorratenden Behälter (3) und ein Auftragorgan (5, 13) aufweist, das am Behälter (3) in einer Gebrauchsstellung derart angebracht ist, dass es das Medium (1) durch Kapillarwirkung außerhalb des Behälters (3) für die Applizierung zur Verfügung stellt, umfassend die Schritte:
- Bilden eines Schlauches (27) aus thermoplastischem Kunststoff durch Extrudieren und Einführen des Schlauches (27) in eine Form (31),
- Ausbilden eines bodenseitig geschlossenen Behälters (3) durch Aufweiten des Schlauches (27) in der Form (13),
- zumindest teilweises Befüllen des in der Form (31) befindlichen Behälters (3) mit dem betreffenden Medium (1),
- Trennen des Behälters (3) vom Schlauch (27) zur Bildung einer an der Oberseite des Behälters (3) zugänglichen Öffnung (41),
- Verbringen des Auftragorgans (5, 13) in seine Gebrauchsstellung durch zumindest teilweises Einführen durch die Öffnung (41) des Schlauches (27) und
- Festlegen des Auftragorgans (5, 13) mit vorzugsweise gleichzeitiger Bildung eines Verschlusses des Behälters (3) mittels Bewegen bewegbarer Formteile (29) der Form (31).

2. Verfahren nach Anspruch 1, **dadurch gekennzeichnet, dass** der Schlauch (27) durch geöffnete, bewegbare Kopfbacken (29) der Form (31) hindurch in eine den Behälter (3) formende Unterform (33) eingeführt wird und dass die Kopfbacken (29) zur Festlegung des eingeführten Auftragorgans (5, 13) geschlossen werden.

3. Verfahren nach Anspruch 1 oder 2, **dadurch gekennzeichnet, dass** ein Auftragorgan (5, 13) eingeführt wird, das einen Haltekörper (13) aufweist, der für ein kapillares, streifen- oder bandförmiges Material (5) eine Einfassung zwischen einem Zuführteil (7), das bei der Gebrauchsstellung in den Behälter (3) ragt, und einem für die Applizierung außerhalb des Behälters (3) befindlichen Abgabeteil (9) bildet, und dass das Auftragorgan (5, 13) durch Anformen des Schlauches (27) an den Haltekörper (13) durch Schließen der Kopfbacken (29) festgelegt wird.

4. Verfahren nach einem der vorstehenden Ansprüche, **dadurch gekennzeichnet, dass** zur Bildung eines über die Festlegestelle (15) am Haltekörper (13) des Auftragorgans (5, 13) überstehenden Schlauchabschnitts das Trennen des Schlauches (27) oberhalb der Kopfbacken (29) erfolgt.

5. Verfahren nach einem der vorstehenden Ansprüche, **dadurch gekennzeichnet, dass** durch an den Kopfbacken (29) vorgesehene Haltebacken (43) durch Anlegen eines Unterdruckes an der Außenseite des überstehenden Schlauchabschnitts dieser für das Einführen des Auftragorgans (5, 13) offengehalten wird.

6. Verfahren nach einem der vorstehenden Ansprüche, **dadurch gekennzeichnet, dass** aus dem über die Festlegestelle (15) überstehenden Schlauchabschnitt beim Schließen der Kopfbacke (29) ein das Abgabeteil (9) des Auftragorgans (5, 13) umschließendes Verschlussteil (19) geformt wird.

7. Verfahren nach einem der vorstehenden Ansprüche, **dadurch gekennzeichnet, dass** beim Formen des Verschlussteils (19) eine Sollbruchstelle (59) ausgebildet wird, an der das Verschlussteil (19) vom Behälter (3) abnehmbar ist.

8. Verfahren nach einem der vorstehenden Ansprüche, **dadurch gekennzeichnet, dass** es als sog. Marker mit einer Markierungsflüssigkeit (1), insbesondere für eine Farbmarkierung, versehen wird.

9. Auftraggerät, das nach dem Verfahren gemäß einem der vorstehenden Ansprüche hergestellt ist.

## Claims

1. A method of producing an applicator for applying liquid or pasty media (1), that comprises a container (3) storing the respective medium (1) and an application element (5, 13) that is attached to the container (3) in a usage position such that it makes the medium (1) available for application outside of the container (3) through capillary action, comprising the steps:
- forming a tube (27) from thermoplastic material by extrusion and inserting the tube (27) into a mould (31),
- forming a container (3) that is closed at the bottom by expanding the tube (27) within the mould (13),
- at least partially filling the container (3) that is in the mould (31) with the respective medium (1),
- separating the container (3) from the tube (27) in order to form an opening (41) that is accessible at the top of the container (3),
- introducing the application element (5, 13) to its usage position by at least partially inserting it through the opening (41) of the tube (27), and
- affixing the application element (5,13) while preferably simultaneously forming a closure of the container (3) by moving moveable mould parts (29) of the mould (31).

2. The method according to Claim 1, **characterised in that** the tube (27) is inserted into a lower mould (33) that forms the container (3) through open, moveable head jaws (29) of the mould (31), and **in that** the head jaws (29) are closed in order to affix the application element (5, 13) that has been inserted.

3. The method according to Claim 1 or 2, **characterised in that** an application element (5, 13) is inserted that has a retaining element (13) that forms an enclosure for a capillary, strip- or band-shaped material (5) between a feed section (7) which projects into the container (3) when in the usage position, and a delivery section (9) which is located outside of the container (3) for the application, and that the application element (5, 13) is affixed by moulding the tube (27) onto the retaining element (13) by closing the head jaws (29).

4. The method according to any of the preceding claims, **characterised in that** in order to form a section of tube that protrudes over the fixing point (15) on the retaining element (13) of the application element (5, 13), separation of the tube (27) takes place above the head jaws (29).

5. The method according to any of the preceding claims, **characterised in that** the protruding section of the tube is held open for the insertion of the application element (5, 13) by retaining jaws (43) provided on the head jaws (29) by applying a negative pressure to the outside the protruding section of the tube.

6. The method according to any of the preceding claims, **characterised in that** a closure part (9), which encloses the delivery section (9) of the application element (5, 13), is moulded from the tube section protruding over the fixing point (15) when closing the head jaw (29).

7. The method according to any of the preceding claims, **characterised in that** when moulding the closure part (19), a predetermined breaking point (59) is formed at which the closure part (19) can be separated from the container (3).

8. The method according to any of the preceding claims, **characterised in that** for use as a so-called marker, it is provided with a marking liquid (1), in particular for colour marking.

9. An applicator that is produced by the method according to any of the preceding claims.

## Revendications

1. Procédé de fabrication d'un appareil applicateur pour appliquer des milieux (1) liquides ou pâteux, qui a un réservoir (3) mettant en réserve le milieu (1) concerné et un organe (5, 13) d'application, qui est mis en une position d'emploi sur le réservoir (3) de manière à ce que le milieu (1) soit mis par effet capillaire à disposition à l'extérieur du réservoir (3) pour l'application, comprenant les stades :
- formation d'un tuyau (27) souple en matière plastique thermoplastique par extrusion et introduction du tuyau (27) souple dans un moule (31),
- constitution d'un réservoir (3) fermé du côté du fond par élargissement du tuyau (27) souple dans le moule (13),
- remplissage au moins partiel du récipient (3) se trouvant dans le moule (31) par le milieu (1) concerné,
- séparation du réservoir (3) du tuyau (27) souple pour la formation d'une ouverture (41) accessible par le côté supérieur du réservoir (3),
- mise de l'organe (5, 13) d'application en sa position d'emploi par introduction au moins partielle dans l'ouverture (41) du tuyau (27) souple et
- fixation de l'organe (5, 13) d'application avec formation de préférence simultanée d'une fermeture du réservoir (3) au moyen de déplacement de pièces (29) mobiles du moule (31).

2. Procédé de fabrication d'un appareil applicateur pour appliquer des milieux (1) liquides ou pâteux suivant la revendication 1, **caractérisé en ce que** l'on introduit le tuyau (27) souple dans des mâchoires (29) de tête ouvertes et mobiles du moule (31), dans un sous-moule (33) formant le réservoir (3) et **en ce que** l'on ferme les mâchoires (29) de tête pour la fixation de l'organe (5, 13) d'application introduit.

3. Procédé de fabrication d'un appareil applicateur pour appliquer des milieux (1) liquides ou pâteux suivant la revendication 1 ou 2, **caractérisé en ce que** l'on introduit un organe (5, 13) d'application, qui a un corps (13) de maintien, lequel, pour une matière (5) capillaire en forme de bande ou de ruban forme une bordure entre une partie (7) d'apport, qui, en la position d'emploi, pénètre dans le réservoir (3) et une partie (9) de distribution se trouvant pour l'application à l'extérieur du réservoir (3) et **en ce que** l'on fixe l'organe (5, 13) d'application par application du tuyau (27) souple sur le corps (13) de maintien en fermant les mâchoires (29) de tête.

4. Procédé de fabrication d'un appareil applicateur pour appliquer des milieux (1) liquides ou pâteux suivant l'une des revendications précédentes, **caractérisé en ce que** pour former un tronçon de tuyau souple dépassant du point (15) de fixation au corps (13) de maintien de l'organe (5, 13) d'application, on effectue la séparation du tuyau (27) souple au-dessus des mâchoires (29) de tête.

5. Procédé de fabrication d'un appareil applicateur pour appliquer des milieux (1) liquides ou pâteux suivant l'une des revendications précédentes, **caractérisé en ce que** par des mâchoires (43) de maintien prévues sur les mâchoires (29) de tête, on maintient, en appliquant une dépression au côté extérieur du tronçon de tuyau souple en saillie, celui-ci ouvert pour l'introduction de l'organe (5, 13) d'application.

6. Procédé de fabrication d'un appareil applicateur pour appliquer des milieux (1) liquides ou pâteux suivant l'une des revendications précédentes, **caractérisé en ce que** l'on forme à partir du tronçon de tuyau souple dépassant du point (15) de fixation, lors de la fermeture des mâchoires (29) de tête une partie (19) de fermeture entourant la partie (9) de distribution de l'organe (5, 13) d'application.

7. Procédé de fabrication d'un appareil applicateur pour appliquer des milieux (1) liquides ou pâteux suivant l'une des revendications précédentes, **caractérisé en ce que** l'on constitue, lors de la formation de la partie (19) de fermeture, un point (59) destiné à se rompre où la partie (19) de fermeture peut être retirée du réservoir (3).

8. Procédé de fabrication d'un appareil applicateur pour appliquer des milieux (1) liquides ou pâteux suivant l'une des revendications précédentes,**caractérisé en ce qu'**il est pourvu de ce que l'on appelle un marqueur d'un liquide (1) de marquage, notamment pour un marquage coloré.

9. Appareil applicateur qui est fabriqué par le procédé suivant l'une des revendications précédentes.
